# EUROPÄISCHE PATENTSCHRIFT

(11) **EP 0 563 696 B1**
(45) Veröffentlichungstag und Bekanntmachung des Hinweises auf die Patenterteilung: **07.01.1999**
(21) Anmeldenummer: 93104503.3
(22) Anmeldetag: 19.03.1993
(51) Int. Cl.: G05D 25/02

(54) **Verfahren und Schaltanordnung zum Ein- und Ausschalten künstlicher Lichtquellen in einem Raum**
Method and switching arrangement for switching on and off artificial light sources in a room
Procédé et mode de couplage pour allumer et éteindre des sources lumineuses artificielles dans une pièce

(30) Priorität: 31.03.1992 CH 1023/92
(43) Veröffentlichungstag der Anmeldung: 06.10.1993
(73) Patentinhaber: KNOBEL AG LICHTTECHNISCHE KOMPONENTEN, CH-8755 Ennenda (CH)
(72) Erfinder: Horn, Peter, CH-8833 Samstagern (CH)
(74) Vertreter: Blum, Rudolf Emil Ernst

(56) Entgegenhaltungen:
- EP-A- 0 285 427
- EP-A- 0 447 136
- DE-A- 3 008 340
- US-A- 4 347 461
- US-A- 4 431 947

## Beschreibung

Die Erfindung betrifft ein Verfahren gemäss Oberbegriff des Anspruchs 1. Ferner betrifft die Erfindung eine Schaltanordnung zur Durchführung des Verfahrens gemäss Oberbegriff des Anspruchs 12.

Ein Verfahren zum automatischen Ein- und Abschalten einer Beleuchtungsanlage in Abhängigkeit von der Beleuchtungsstärke ist z.B. aus dem Europäischen Patent EP-A-0 447 136 bekannt. Im weiteren sind Anlagen bekannt, bei welchen in einem Raum unter Verwendung einer Regelanlage, eines oder mehreren Lichtsensoren und dimmbaren elektronischen Vorschaltgeräten ein konstantes Beleuchtungsniveau geregelt wird, um bei Tageslicht einen Teil der elektrischen Energie für die künstliche Beleuchtung einsparen zu können. Einer der Nachteile der bekannten Anlagen ist die umständliche Einregulierung des gewünschten Beleuchtungsniveaus auf welchem geregelt werden soll. Der Lichtsensor ist bei den meisten Anlagen an der Decke montiert und misst die von der Arbeitsfläche reflektierte Beleuchtungsstärke. Bei der Einregulierung wird die Beleuchtungsstärke mit einem Luxmeter auf der Arbeitsfläche gemessen und der gewünschte Sollwert wird während dieser Messung mit Hilfe eines Potentiometers oder eines Stufenschalters eingestellt. Wenn sich die Reflexionsgrade im Raum z.B. durch Auswechslung der Möbel oder der Bodenbeläge verändern, wird die am Lichtsensor gemessene Beleuchtungsstärke an der Decke verändert und eine erneute, umständliche Einregulierung ist nötig. Aus US-A-4 347 461 ist eine Vorrichtung bekannt, bei welcher zwei Sensoren verwendet werden, von denen der eine nur die Beleuchtungsstärke der Lampe misst, und der andere Sensor das von der beleuchteten Fläche abgestrahlte Licht misst und somit das Licht der Lampe und natürliches Licht misst. Die Wechselstromanteile beider Sensoren werden verglichen und daraus wird ein Multiplikationsfaktor für das Signal des zweiten Sensors gebildet, das nach der Multiplikation mit einem festen, voreingestellten Schwellwert verglichen wird. Abhängig von diesem Vergleich wird die Lampe mittels eines Komparators mehr oder weniger hell eingestellt oder ganz abgeschaltet oder wieder eingeschaltet. Die Vorrichtung benötigt zwei verschieden ausgerichtete Sensoren und eine Schaltung zur Verknüpfung von deren Signalen und ist damit aufwendig.

Es ist daher Aufgabe der Erfindung ein Verfahren zu schaffen, bei welchem diese Nachteile nicht auftreten und bei welchem auf einfache Weise mit Hilfe eines Lichtsensors die Beleuchtung automatisch abgeschaltet wird, wenn genügend Licht am Arbeitsplatz vorhanden ist. Dies soll ohne manuelle Einstellung des Beleuchtungsniveaus möglich sein und eine automatische, einstellfreie Anpassung an die sich ändernden Reflexionsgrade im Raum ermöglichen.

Diese Aufgabe wird durch die kennzeichnenden Merkmale des Anspruchs 1 gelöst.

Eine nach dem Verfahren arbeitende Schaltanordnung gemäss Anspruch 12 soll die entsprechenden Aufgaben lösen, d.h. eine einfache Installation ohne Abgleich und eine Anpassung an sich ändernde Raumeigenschaften ermöglichen. Dies wird mit den kennzeichnenden Merkmalen des Anspruchs 12 erreicht.

Die messbare Beleuchtungsstärke der ein- und ausschaltbaren (künstlichen) Lichtquellen ergibt sich durch die Reflexion des von den Lichtquellen ausgesandten Lichtes im Raum. Die Beleuchtungsstärke der Lichtquellen enthält somit die Information über die momentanen Reflexionseigenschaften des Raumes. Dadurch, dass die Schwellenwerte zur Ein- und Ausschaltung jeweils in Abhängigkeit dieser messbaren Beleuchtungsstärke der Lichtquellen bestimmt werden, ergibt sich somit eine Anpassung der Schwellenwerte an die derzeitigen Reflexionseigenschaften des Raumes. Eine entsprechend dem Verfahren arbeitende Schaltanordnung für die Lichtquellen ist somit "selbstlernend" da sie ihre Schaltschwellen an die Raumreflexionseigenschaften anpasst. Diese Anpassung erfolgt sowohl bei der ersten Inbetriebnahme einer solchen Schaltanordnung von einer vorgegebenen Grundeinstellung aus, wodurch der erwähnte arbeitsaufwendige Abgleich nach Stand der Technik völlig entfällt, als auch während des Betriebs, wenn die Reflexionseigenschaften des Raumes ändern. Dies kann z.B. bereits durch das Ausbreiten einer grossen, stark reflektierenden Planzeichnung im Raum der Fall sein, jedenfalls aber bei Aenderung der Möblierung, des Teppichs, usw.

Im folgenden wird die Erfindung anhand der beiliegenden Zeichnungen erläutert. Es zeigen:
Figur 1 eine Ausführung einer Schaltanordnung gemäss der Erfindung zum Ein- und Ausschalten der künstlichen Beleuchtung;
Figur 2 eine andere Ausführung einer Schaltanordnung gemäss der Erfindung zum Dimmen, Ein- und Ausschalten der künstlichen Beleuchtung;
Figur 3 den Verlauf der Beleuchtungsstärke der Beleuchtung in Figur 1; und
Figur 4 den Verlauf der Beleuchtungsstärke der Beleuchtung in Figur 2.

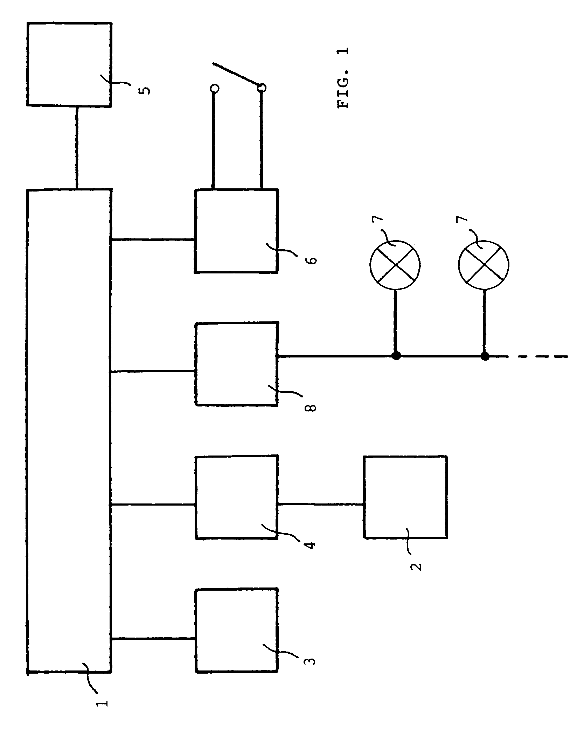

Figur 1 zeigt eine Schaltanordnung mit einer Auswerteeinrichtung 1, die z.B. von einem Mikroprozessor gebildet wird. An die Auswerteeinrichtung ist ein Lichtsensor 2 zur Messung der Beleuchtungsstärke über einen Analog/Digitalwandler 4 angeschlossen, ferner ein Sensor zur Erfassung der Personenbewegung 3. An dem Mikroprozessor ist weiter ein nichtflüchtiger Speicher 5 zur Speicherung der berechneten Werte angeschlossen und ein manueller Schalter 6 zum Ein- und Ausschalten der Lichtquellen 7 von Hand. Das Schalten der Lichtquellen 7 erfolgt mittels des von der Auswerteeinrichtung 1 gesteuerten Schalters 8. Mit dieser Schaltanordnung ist eine automatische Ein- und Abschaltung der Beleuchtung sowie die Umsetzung des erfindungsgemässen Verfahrens zum Selbstlernen und Erfassen des Wertes des im Raum installierten, künstlichen Beleuchtungsniveaus möglich.

Die effektive Beleuchtungsstärke am Arbeitsplatz kann mit einem Luxmeter an der Arbeitsfläche gemessen werden. Weil der Lichtsensor zur selbsttätigen Ein- und Ausschaltung von Lichtquellen indes meistens an der Decke des Raumes befestigt ist, misst er eigentlich die Beleuchtungsstärke an der Decke. Die Beleuchtungsstärke an der Decke entsteht durch die Reflexion der von der künstlichen Beleuchtung (von den Lichtquellen) erzeugten Lichtstrahlen im Raum, insbesondere auch an der Arbeitsfläche. Wenn man die Schwellenwerte zur Ausschaltung und zur Einschaltung der künstlichen Beleuchtung fest einstellt, so kann bei einer Veränderung des Reflexionsgrades von der Arbeitsfläche zur Decke eine falsche Einstellung resultieren. In dem erfindungsgemässen Verfahren wird den im Raum veränderbaren Reflexionsfaktoren Rechnung getragen, indem eine häufige Messung und Berechnung des Wertes des installierten, künstlichen Beleuchtungsniveaus, d.h. der Beleuchtungsstärke der Lichtquellen, und die Aenderung der Schaltschwellen zur Ein- und Ausschaltung stattfindet.

Durch die Verwendung eines Mikroprozessors mit einem stromunabhängigen Speicher ist eine solche automatische und adaptive Erkennung des installierten Beleuchtungsniveaus der künstlichen Beleuchtung besonders einfach möglich. Die nach dem erfindungsgemässen Verfahren arbeitende Anlage kann damit bei ausreichendem Aussenlicht die künstliche Beleuchtung abschalten, wenn nach dem Abschalten die vom Aussenlicht verursachte Beleuchtungsstärke immer noch grösser ist, als die künstliche Beleuchtungsstärke. Die fortlaufende Messung und Berechnung des installierten künstlichen Beleuchtungsniveaus, das sich vorzugsweise aus der Differenz der gemessenen Beleuchtungsstärke vor und nach dem Abschalten ergibt, ermöglicht eine ständige Anpassung auf veränderte Reflexionsgrade im Raum, wie z.B. Aufhängung von Bildern, Verlegung eines neuen Teppichs oder Auswechslung der Möbel. Das Verfahren zur adaptiven Erkennung des installierten Beleuchtungsniveaus funktioniert vorzugsweise wie folgt. Nach jeder Abschaltung der künstlichen Beleuchtung wird die Differenz der Beleuchtungsstärke vor und nach dem Abschalten gebildet. Die Differenz wird als nur von der künstlichen Beleuchtung stammende Beleuchtungsstärke angenommen und nach jeder Abschaltung oder nach einer Reihe von Abschaltungen der Lichtquellen ermittelt. Danach werden die Schaltschwellen zur Ein- und Ausschaltung der Lichtquellen bestimmt. Mit diesem Verfahren entfällt jegliche Einstellung der gemessenen Beleuchtungsstärke nach der Installation der Anlage.

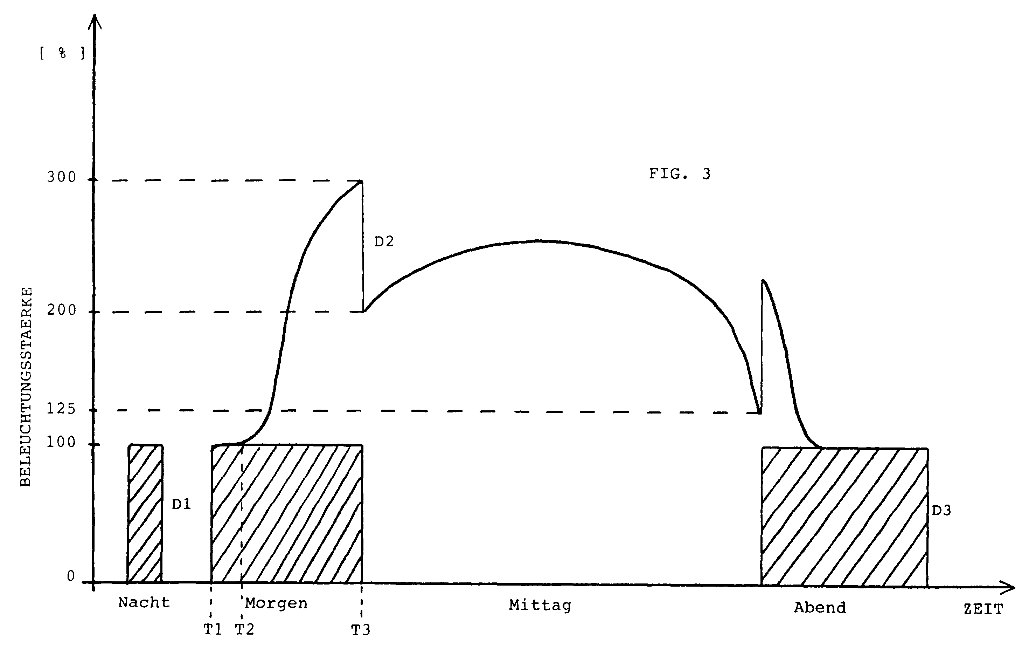

In Figur 3 ist ein möglicher Verlauf der Beleuchtungsstärke in einem Raum während eines Sommertages gezeichnet. In diesem Raum ist eine Beleuchtungsanlage installiert, die nur ein- oder ausgeschaltet werden kann und bei welcher keine kontinuierliche Regelung der Beleuchtungsstärke möglich ist. Es ist ersichtlich, dass in der Nacht ohne Tageslicht der Wert des künstlichen Beleuchtungsniveaus D1 direkt der gemessenen Beleuchtungsstärke der Lichtquellen im Raum auch für einen an der Decke befestigten Lichtsensor entspricht und als 100 % angenommen werden kann. Dieser Wert lässt sich auch am Tag bei in den Raum einfallendem Aussenlicht aus der Differenzmessung zwischen den Beleuchtungsstärken vor und nach dem Abschalten der Beleuchtung berechnen (D1, D2, D3). Die Messung nach dem Abschalten ist deshalb bevorzugt, weil man eher annehmen kann, dass die Lampen in einem warmen Betriebszustand 100 % Lichtleistung abgeben, was unmittelbar nach dem Einschalten bei den meisten Lampen nicht der Fall ist. Die wichtigste Aussage des Verlaufes der Beleuchtungsstärke in Figur 3 ist, dass auch bei Tageslicht der Wert des künstlichen Beleuchtungsniveaus mit dem erfindungsgemässen Verfahren ermittelt wird, in diesem Fall der Wert D2 (gleich D1 und D3).

Es ist vorteilhaft, die Berechnung des Wertes des künstlichen Beleuchtungsniveaus über mehrere Differenzbildungen zu mitteln, damit weniger Schwankungen in der ermittelten Beleuchtungsstärke entstehen. Durch Veränderung der Reflexionsgrade im Raum oder am Tisch unter dem Lichtsensor, was man sich leicht mit weniger oder mehr weissem Papier vorstellen kann, sind solche Schwankungen unvermeidbar.

Es ist auch vorteilhaft, bestimmte Messungen, die z.B. am oberen Ende des Messbereiches liegen, in der Berechnung nicht zu berücksichtigen.

In Figur 3 ist ein möglicher Verlauf der Beleuchtungsstärke mit einer automatischen Ein- und Ausschaltung der Beleuchtung dargestellt, wobei der Anteil der künstlichen Beleuchtung schraffiert ist. Als Beispiel wurden folgende Schwellenwerte festgelegt, die erfindungsgemäss eben in Abhängigkeit der ermittelten Beleuchtungsstärke (= 100 %) stehen: Schwellwert zum Einschalten der Lichtquellen bei 125 % des künstlichen Beleuchtungsniveaus bzw. Beleuchtungsstärke der Lichtquellen; Schwellenwert zum Ausschalten bei 300 % des künstlichen Beleuchtungsniveaus. Die Schalthysterese beträgt damit 75 %. Am Morgen werden die Lichtquellen zum Zeitpunkt T1 von Hand eingeschaltet. Zum Zeitpunkt T2 steigt die Beleuchtungsstärke im Raum durch das zusätzlich einfallende Sonnenlicht an. Zum Zeitpunkt T3 ist die Ausschaltschwelle bei 300 % der bisher ermittelten Beleuchtungsstärke der Lichtquellen erreicht. Die Lichtquellen werden bei T3 abgeschaltet. Dies ergibt den gezeigten Abfall der Beleuchtungsstärke im Raum um den Betrag D2, was vom Lichtsensor und der Auswerteeinrichtung ermittelt wird. Im gezeigten Fall ist D2 wieder gleich dem Wert von D1 bzw. 100 %. An den Reflexionseigenschaften des Raumes hat sich also seit der letzten Ermittlung der künstlichen Beleuchtungsstärke (D1 = 100%) nichts geändert. Der ermittelte Wert D2 kann zwar gespeichert und zur Bestimmung der Schaltschwellen verwendet werden, er ändert aber die Schaltschwellen nicht, da er eben identisch zum schon ermittelten Wert D1 ist. Hätten sich indes die Reflexionseigenschaften des Raumes seit der letzten Ermittlung der Beleuchtungsstärke (D1) geändert, so wäre der ermittelte Wert D2 ungleich D1 (grösser oder kleiner). Entsprechend würde dieser Wert D2 bei der folgenden neuen Bestimmung Einfluss auf die Schaltschwellen nehmen, d.h. diese würden an die neuen Raumreflexionseigenschaften angepasst. Durch die Mittelwertbildung aus jeweils mehreren ermittelten Werten D1, D2, D3... ergibt sich in der Regel indes gewollt eine nur langsame Anpassung der Schwellenwerte.

Die Wahl einer relativ grossen Schalthysterese kann drei wichtige Grunde haben. Der erste Grund ist die problemlose Adaption des menschlichen Auges auf grössere Beleuchtungsstärken und seine Ermüdung und Nachlassen der Konzentration bei zu kleinen Beleuchtungsstärken. Der zweite Grund ist die Berücksichtigung der Alterung der Lampen während ihrer Lebensdauer und damit die Abnahme des installierten Beleuchtungsniveaus auf etwa 80 % gegen Ende ihrer Lebensdauer. Der dritte Grund ist, möglichst wenig Störungen am menschlichen Auge beim Aus- und Einschalten der Beleuchtung zu produzieren, was durch eine genügend grosse Schalthysterese und Einführung einer Zeitverzögerung vor dem Ausschalten garantiert wird.

Die Anwendung des erfindungsgemässen Verfahrens ist aus der Sicht der Energieeinsparung und der Bedienungsfreundlichkeit bei der Installation und im Betrieb sehr vorteilhaft. Bereits bei der Installation muss keine Einstellung der gewünschten Beleuchtungsstärke vorgenommen werden, weil mit dem erfindungsgemässen Verfahren durch Ermittlung des Wertes des künstlichen Beleuchtungsniveaus und Anpassung der Schaltschwellen die Anlage durch Selbstlernen nach mehrmaligem Ein- und Ausschalten, was durch den üblichen, manuell bedienbaren Lichtschalter des Raumes erfolgt, auf die jeweilige Raumverhältnisse automatisch angepasst wird. Durch die Verwendung nichtflüchtiger Speicher 5 gehen auch bei einem Stromausfall die gespeicherten Werte nicht verloren. Bei einer Aenderung der Reflexionsgrade im Raum wird die Anpassung auf die neuen Verhältnisse allmählich, ohne manuelle Einstellungen, vorgenommen. Durch Verwendung des manuellen Lichtschalters ist es jederzeit möglich, das Anlernen der Anlage zu beschleunigen und die Automatik jederzeit ausser Betrieb zu setzen, wenn dies gewünscht wird. Bevorzugterweise kann ferner ein Bewegungsmelder 3 vorgesehen sein, der die Lichtquellen im Raum der Anwesenheit einer Person im Raum einschaltet bzw. bei Abwesenheit einer Person die Lichtquellen ausschaltet.

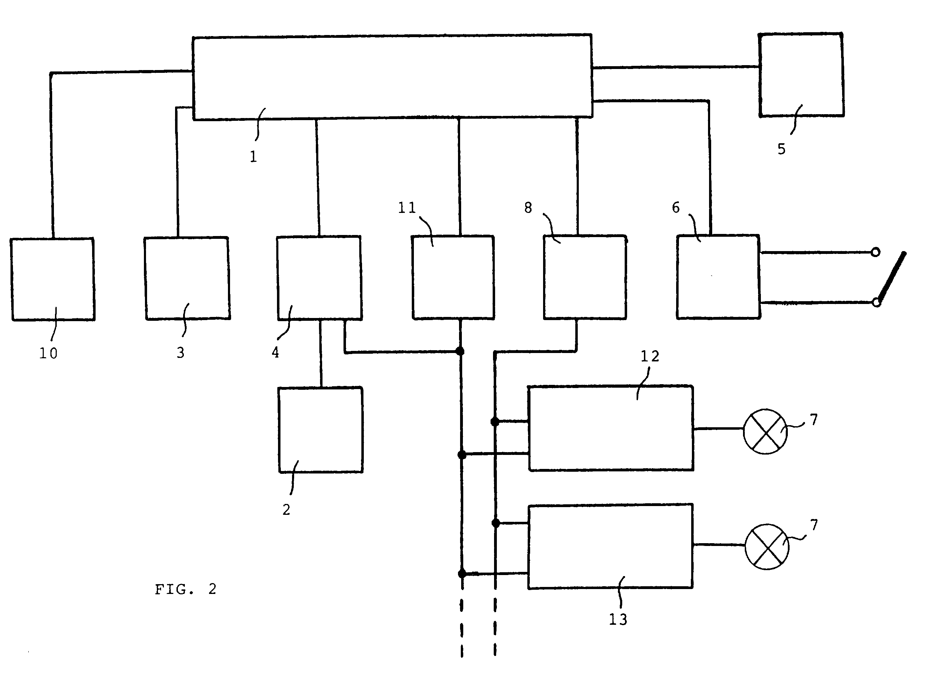

In Figur 2 ist eine andere Anlage schematisch dargestellt, mit der das erfindungsgemässe Verfahren auch ausgeführt werden kann. Zu den Baugruppen, die bereits in der Anlage von Figur 1 vorhanden sind, sind zusätzlich ein Infrarotempfänger 10 zum Empfangen von Infrarotsignalen einer Fernbedienung, die wahlweise verwendet werden kann, und ein Signalgenerator 11 vorhanden zur Generierung von Steuersignalen für elektronische, dimmbare Vorschaltgeräte 12, 13, welche zum Dimmen der Beleuchtung z.B. in einem Bereich von 2 bis 100 % geeignet sind. Mit Hilfe der Infrarot-Fernbedienung kann man z.B. einen Sollwert der künstlichen Beleuchtung, auf welchem die Anlage geregelt werden soll, einstellen und mit Hilfe der Fernbedienung im nichtflüchtigen Speicher 5 so lange festhalten, bis ein nächster Sollwert gespeichert wird. Es können auch mehrere Sollwerte gespeichert werden, wenn die Fernbedienung dafür ausgelegt ist. Ein Sollwert kann aber auch mit Hilfe der manuellen Schalter eingelesen und gespeichert werden, wenn keine Fernbedienung vorhanden ist.

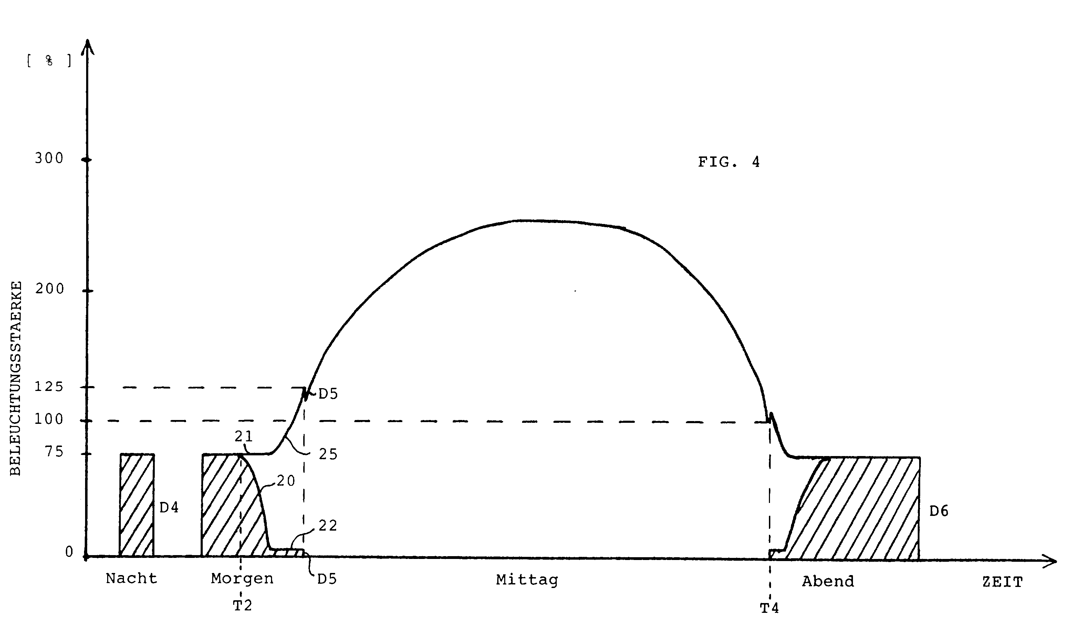

In Figur 4 ist ein möglicher Verlauf der Beleuchtungsstärke mit einer zum Dimmen der künstlichen Beleuchtung vorgesehenen Anlage dargestellt. Der Anteil der künstlichen Beleuchtung ist schraffiert. Dabei wurden als ein Ausführungsbeispiel der Erfindung folgende Werte festgelegt:

| | |
|---|---|
| Sollwert der Beleuchtungsstärke | 75 % |
| Schwellenwert zum Einschalten | 100 % |
| Schwellenwert zum Ausschalten | 125 % |

Bei beginnender und steigender Sonneneinstrahlung (T2) in den Raum werden dabei die Lichtquellen immer mehr gedimmt (Kurvenverlauf 20 der Beleuchtungsstärke der Lichtquellen). Die resultierende Beleuchtungsstärke 21 bleibt daher zunächst konstant auf dem Sollwert von 75 % der Beleuchtungsstärke der Lichtquellen. Nach dem Erreichen der minimalen Beleuchtungsstärke der Lichtquellen 22, d.h. bei der maximalen Dimmung der Lichtquellen, ergibt sich ein Anstieg 25 der resultierenden Beleuchtungsstärke entsprechend der zunehmenden Sonnenlichteinstrahlung. Beim Erreichen des Ausschaltschwellenwertes für die Lichtquellen, die maximal gedimmt sind, ergibt sich durch deren Ausschaltung nur ein geringer Abfall der Beleuchtungsstärke D5. Entsprechend spielt sich der Vorgang beim Einschalten der zunächst voll gedimmten Lichtquellen beim Erreichen des Einschaltschwellenwertes von 100 % ab (T4).

Gegenüber dem Verlauf der Beleuchtungsstärke von Figur 3 ist ersichtlich, dass mit einer dimmbaren Anlage wesentlich mehr Komfort für das menschliche Auge erzielt werden kann. Auch ist die Störung bei der Abschaltung oder Einschaltung der gedimmten Beleuchtung beim Tageslicht minimal. Für die periodische Berechnung des Wertes des künstlichen Beleuchtungsniveaus ist aber bei dieser Anlage Vorsicht geboten. Hier muss man nur solche Differenzen der mit Lichtsensor gemessenen Beleuchtungsstärke vor und nach dem Abschalten berücksichtigen, die wesentlich grösser sind als die gemessene Beleuchtungsstärke nach dem Abschalten selber. Zur Kontrolle kann man die Ausgangsspannung des Steuergenerators 11 dem A/D-Wandler 4 zuführen und diese mit dem Mikroprozessor 1 überwachen. Im Beispiel in Figur 4 wird man die Differenzen D4 und D6 für die Mittelwertbildung annehmen, die Differenz D5 jedoch verwerfen.

Die einfachste Variante der in Figur 2 dargestellten Anlage ist die ohne Infrarot-Fernbedienung. Der Sollwert kann jeweils auf 100 % des Wertes des künstlichen Beleuchtungsniveaus gemäss der Erfindung adaptiv angepasst werden, wobei der Schwellwert zum Ausschalten der Beleuchtung auf z.B. 130 % mit einer Zeitverzögerung und der Schwellwert zum Einschalten z.B. auf 110 % ohne Zeitverzögerung angesetzt werden können. Wenn die künstliche Beleuchtungsstärke im minimalen Dimmzustand 2 % der maximalen künstlichen Beleuchtungsstärke beträgt, ergibt sich für das menschliche Auge ein maximaler Komfort, ohne dass das Ein- und Ausschalten der Beleuchtung wahrgenommen werden kann. In diesem Falle der Verteilung des Sollwertes und der Schwellenwerte (100, 110, 130 %) wird der Wert des künstlichen Beleuchtungsniveaus ständig erfasst, gemittelt und berechnet. Beträgt der Wert des künstlichen Beleuchtungsniveaus z.B. 0,6 V in Form der Ausgangsspannung des Lichtsensors, so wird das Ausgangssignal des Signalgenerators 11 ständig geregelt, damit am Lichtsensor die 0,6 V erhalten bleiben. Steigt die Ausgangsspannung am Lichtsensor über 0,6 V, wird am Signalgenerator die minimale Steuerspannung erscheinen. Bei mehr als 0,78 V am Lichtsensor (130 %) wird die Beleuchtung nach z.B. 5 Minuten abgeschaltet. Sinkt die Ausgangsspannung des Lichtsensors unter 0,66 V (110 %), so wird die Beleuchtung ohne Zeitverzögerung eingeschaltet. Der Wert des künstlichen Beleuchtungsniveaus wird an die veränderbare Reflexionsgrade im Raum ständig angepasst, so dass er z.B. Werte 0,58 V, 0,64 V, 0,59 V, 0,7 V usw. im gleichen Raum annehmen kann. Gleichzeitig werden aber der Sollwert und die Schwellenwerte umgerechnet, so dass z.B. bei 0,7 V des Wertes des künstlichen Beleuchtungsniveaus der Sollwert der Beleuchtungsstärke auch 0,7 V (100 %), der Schwellenwert zum Einschalten 0,77 V (110 %) und der Schwellenwert zum Ausschalten 0,91 V (130 %) betragen.

Die Beleuchtungsstärke wird bevorzugterweise mit einem an der Decke befestigten Lichtsensor gemessen, dessen spektrale Lichtempfindlichkeit an die spektrale Lichtempfindlichkeit des menschlichen Auges angepasst ist. Diese Anpassung ist wichtig, damit bei einem Aussenlicht mit einem sehr starken Anteil an ultravioletter und infraroter Strahlung die gemessene Beleuchtungsstärke nicht verfälscht wird. Das Ziel der Messung der vorhandenen Beleuchtungsstärke ist es, die künstliche Beleuchtung abzuschalten, wenn genügend Aussenlicht zur Beleuchtung des Raumes vorhanden ist. Jeder Lichtsensor integriert die einfallenden Lichtstrahlen über seine spektrale Empfindlichkeit in der Abhängigkeit der Wellenlänge dieser einfallenden Lichtstrahlen. Würde der Lichtsensor auch die Lichtstrahlen integrieren, die für das menschliche Auge nicht sichtbar sind, ergäbe sich ein zu starkes Ausgangssignal am Lichtsensor. Die Auswertung der von unsichtbaren Lichtstrahlen generierten Ausgangssignale führt zwangsläufig zu einer falschen Messung der Beleuchtungsstärke im Raum und zu einer verfrühten Abschaltung der künstlichen Beleuchtung. Der verwendete Lichtsensor misst daher nur die auch für das menschliche Auge sichtbaren Lichtstrahlen mit der gleichen Gewichtung und vermeidet dadurch eine verfrühte Abschaltung der künstlichen Beleuchtung.

## Patentansprüche

1. Verfahren zum selbsttätigen Ein- und Ausschalten von Lichtquellen (7) in einem Raum, in Abhängigkeit der in dem Raum herrschenden Beleuchtungsnsstärke, mittels einer die Lichtquellen (7) schaltenden Schaltanordnung (1, 8) mit einem lichtempfindlichen Sensor (2) zur Ermittlung der in dem Raum herrschenden Beleuchtungsstärke, wobei das Ein- bzw. Ausschalten jeweils in Abhängigkeit von einem Schwellenwert der im Raum vom Sensor (2) gemessenen Beleuchtungsstärke erfolgt, dadurch gekennzeichnet, dass die Beleuchtungsstärke der Lichtquellen (7) durch die Schaltanordnung dadurch ermittelt wird, dass beim Abschalten der Lichtquellen (7) die Differenz zwischen der vom Sensor (2) gemessenen Beleuchtungsstärke vor dem Abschalten und nach dem Abschalten der Lichtquellen (7) ermittelt wird, und dass der jeweilige Schwellenwert durch die Schaltanordnung (1, 8) in periodischen oder zufälligen Abständen in Abhängigkeit von der ermittelten Beleuchtungsstärke der Lichtquellen (7) neu bestimmt wird.

2. Verfahren nach Anspruch 1, dadurch gekennzeichnet, dass das Ein- und Ausschalten der Lichtquellen (7) ferner in Abhängigkeit der Ausgangssignale eines die Personenanwesenheit im Raum detektierenden Sensors (3) erfolgt.

3. Verfahren nach einem der Ansprüche 1 oder 2, dadurch gekennzeichnet, dass die Ein- und Ausschaltung der Lichtquellen (7) ferner in Abhängigkeit von der Stellung mindestens eines manuell bedienbaren Ein/Aus-Schalters erfolgt.

4. Verfahren nach Anspruch 1, dadurch gekennzeichnet, dass eine Mehrzahl von ermittelten Differenzen gespeichert werden, dass aus diesen Differenzen und der zuletzt ermittelten Differenz ein Mittelwert der Beleuchtungsstärke der Lichtquellen berechnet wird, und dass nach jeder Mittelwertbildung die älteste Differenz im Speicher gelöscht wird, um den Wert der Beleuchtungsstärke fortwährend zu aktualisieren.

5. Verfahren nach einem der Ansprüche 1 bis 4, dadurch gekennzeichnet, dass die Beleuchtungsstärke der Lichtquellen nur dann bestimmt wird, wenn die vor dem Abschalten gemessene Beleuchtungsstärke und/oder die nach dem Abschalten gemessene Beleuchtungsstärke oder ihre Differenz vorbestimmte Grenzen nicht über- oder unterschreiten.

6. Verfahren nach einem der Ansprüche 1 bis 5, dadurch gekennzeichnet, dass nach jeder Ermittlung des Wertes der Beleuchtungsstärke der Lichtquellen ein Schwellenwert zum Ausschalten der Lichtquellen bei grosser Beleuchtungsstärke und ein Schwellenwert zum Einschalten der Lichtquellen bei kleiner Beleuchtungsstärke neu bestimmt wird.

7. Verfahren nach einem der Ansprüche 1 bis 6, dadurch gekennzeichnet, dass der Schwellenwert zum Ausschalten der Lichtquellen auf einen Wert zwischen 150 bis 400 % des Wertes der Beleuchtungsstärke der Lichtquellen und der Schwellenwert zum Einschalten der Lichtquellen auf einen Wert zwischen 50 bis 200 % des Wertes der Beleuchtungsstärke der Lichtquellen festgelegt wird, wobei die Differenz zwischen den Schwellenwerten zum Ausschalten und zum Einschalten der Lichtquellen grösser als 100 % des Wertes der Beleuchtungsstärke der Lichtquellen ist.

8. Verfahren nach einem der Ansprüche 1 bis 7, dadurch gekennzeichnet, dass die Lichtquellen abgeschaltet werden, wenn die gemessene Beleuchtungsstärke während einer vorbestimmten Zeitdauer grösser als der Schwellenwert zum Ausschalten der Lichtquellen ist und dass die Lichtquellen ohne Zeitverzögerung eingeschaltet werden, wenn die gemessene Beleuchtungsstärke kleiner als der Schwellenwert zum Einschalten der Lichtquellen ist.

9. Verfahren nach einem der Ansprüche 1 bis 8, dadurch gekennzeichnet, dass nach jeder neuen Ermittlung des Wertes der Beleuchtungstärke der Lichtquellen ein Sollwert der Beleuchtungsstärke, ein Schwellenwert zum Ausschalten der Lichtquellen bei grosser Beleuchtungsstärke und ein Schwellenwert zum Einschalten der Lichtquellen bei kleiner Beleuchtungsstärke neu berechnet werden.

10. Verfahren nach Anspruch 9, dadurch gekennzeichnet, dass der Sollwert der Beleuchtungsstärke auf einen Wert zwischen 10 bis 200 % des Wertes der Beleuchtungsstärke der Lichtquellen eingestellt wird, dass der Schwellenwert zum Ausschalten der Lichtquellen auf einen Wert zwischen 20 bis 300 % des Wertes der Beleuchtungsstärke der Lichtquellen und der Schwellenwert zum Einschalten der Lichtquellen auf einen Wert zwischen 10 bis 200 % des Wertes der Beleuchtungsstärke der Lichtquellen eingestellt werden, wobei die Differenz zwischen den Schwellenwerten zum Ausschalten und zum Einschalteen der Lichtquellen grösser als 10 % des Wertes der Beleuchtungsstärke der Lichtquellen ist.

11. Verfahren nach einem der Ansprüche 1 bis 10, dadurch gekennzeichnet, dass die Beleuchtungsstärke im Raum auf einen Sollwert der Beleuchtungsstärke kontinuierlich geregelt wird, dass die Lichtquellen abgeschaltet werden, wenn die gemessene Beleuchtungsstärke während einer vorbestimmten Zeitdauer grösser als der Schwellenwert zum Ausschalten der Lichtquellen ist und dass die Lichtquellen ohne Zeitverzögerung eingeschaltet werden, wenn die gemessene Beleuchtungsstärke kleiner als der Schwellenwert zum Einschalten der Lichtquellen ist.

12. Schaltanordnung zum selbsttätigen Ein- und Ausschalten von Lichtquellen (7) in einem Raum in Abhängigkeit der in dem Raum herrschenden Beleuchtungsstärke, umfassend einen Lichtsensor (2) zur Ermittlung der in dem Raum herrschenden Beleuchtungsstärke, eine auf dessen Ausgangspegel ansprechende Auswerteschaltung (1) und mindestens einen auf die Auswerteschaltung ansprechenden Schalter (8) zum Schalten der Lichtquellen (7), dadurch gekennzeichnet, dass die Auswerteschaltung (1) zur Bestimmung der Beleuchtungsstärke der Lichtquellen (7) mittels des Lichtsensors (2) derart ausgestaltet ist, dass beim Abschalten der Lichtquellen (7) die Differenz zwischen der vom Sensor (2) gemessenen Beleuchtungsstärke vor dem Abschalten und nach dem Abschalten gebildet wird, und dass die Auswerteschaltung (1) zur Bestimmung von Schwellenwerten für die Ein- bzw. Ausschaltung in Abhängigkeit von der ermittelten Beleuchtungsstärke der Lichtquellen (7) ausgestaltet ist.

13. Schaltanordnung nach Anspruch 12, gekennzeichnet durch einen Bewegungssensor (3) zur Erfassung der Personenbewegung und durch Mittel (1) zum Ein- und Ausschalten der Lichtquellen in Abhängigkeit vom Ausgangssignal des Bewegungssensors.

14. Schaltanordnung nach Anspruch 12 oder 13, dadurch gekennzeichnet, dass die Schaltanordnung einen Eingang (6) zum Anschluss eines von Hand betätigbaren Schalters zum Ein- und Ausschalten der Lichtquellen aufweist.

15. Schaltanordnung nach einem der Ansprüche 12 bis 14, dadurch gekennzeichnet, dass die Schaltanordnung Mittel (1,11,12,13) zum Einstellen der von den Lichtquellen abgegebenen Lichtleistung aufweist.

16. Schaltanordnung nach einem der Ansprüche 12 bis 15, dadurch gekennzeichnet, dass der Lichtsensor (2) eine spektrale Empfindlichkeitskurve aufweist, welche im wesentlichen derjenigen des menschlichen Auges entspricht.

## Claims

1. Method for automatically switching light sources (7) in a room on and off according to the luminosity in that room, with a command circuit (1, 8) which actuates the light sources (7) and which comprises a light-sensitive sensor (2) for determining the luminosity in the room, where the switching on, respectively off, occurs in dependence of a threshold of the luminosity measured in the room by the sensor (2), characterised in that the command circuit determines the luminosity of the light sources (7) through a measure, when turning the light sources (7) off, of the difference between the luminosity measured by the sensor (2) before and after the light sources (7) have been turned off, and in that the command circuit (1, 8) redetermines, at regular or random intervals, the actual threshold value in dependence of the measured luminosity of the light sources (7).

2. Method according to claim 1, characterised in that the switching on and off of the light sources (7) also depends on the output signal of a sensor (3) which detects the presence of a person in the room.

3. Method according to one of claims 1 or 2, characterised in that the switching on and off of the light sources (7) also depends on the position of at least one manually operable on/off switch.

4. Method according to claim 1, characterised in that one stores several observed differences, that one calculates from these differences a mean of the luminosity of the light sources, and that after the calculation of each mean the oldest difference is erased from the memory in order to constantly update the value of the luminosity.

5. Method according to any of claims 1 to 4, characterised in that one only determines the luminosity of the light sources when the luminosity measured before switching off and/or the luminosity measured after switching off, or their difference do not get above or below predetermined limiting values.

6. Method according to any of claims 1 to 5, characterised in that after each assessment of the luminosity of the light sources one determines a threshold value for switching off the light sources in case of a high luminosity, and also a threshold value for switching on the light sources in case of low luminosity.

7. Method according to any of claims 1 to 6, characterised in that the threshold for switching the light sources off is set at a value between 150 and 400% of the luminosity of the light sources and that the threshold for switching the light sources on is set at a value between 50 and 200% of the luminosity of the light sources, whereby the difference between the thresholds for switching the light sources off and on is larger than 100% of the luminosity of the light sources.

8. Method according to any of claims 1 to 7, characterised in that the light sources are switched off when the measured luminosity exceeds the threshold for switching off the light sources during a given time interval, and in that the light sources are switched on without delay when the measured luminosity is smaller than the threshold for switching the light sources on.

9. Method according to any of claims 1 to 8, characterised in that for each new measurement of the luminosity of the light sources one calculates anew a rated value of the luminosity, a threshold value for switching off the light sources in case of high luminosity, and a threshold value for switching on the light sources in case of low luminosity.

10. Method according to claim 9, characterised in that one sets the rated value of the luminosity at a value comprised between 10 and 200% of the luminosity of the light sources, the threshold for switching off the light sources at a value comprised between 20 and 300% of the luminosity of the light sources, and the threshold for switching on the light sources at a value comprised between 10 and 200% of the luminosity of the light sources, the difference between the thresholds for switching the light sources being larger than 10% of the luminosity of the light sources.

11. Method according to any of claims 1 to 10, characterised in that one continuously maintains the luminosity in the room at a rated value, that the light sources are switched off when the measured luminosity exceeds the threshold for switching off the light sources during a given time interval, and in that the light sources are switched on without delay when the measured luminosity is smaller than the threshold for switching the light sources on.

12. Switching device for automatically switching light sources in a room on and off according to the luminosity in that room, with a light sensor (2) for assessing the luminosity in the room, a processing circuit (1) that reacts to the output level of said sensor, and at least a switch (8) commanded by the circuit for actuating the light sources (7), characterised in that the processing circuit (1) for assessing the luminosity of the light sources (7) by way of the light sensor (2) is built so as to calculate, when the light sources (7) are switched off, the difference between the luminosity measured by the sensor (2) before and after switch-off, and that the processing circuit (1) is built so as to determine the thresholds for switching on and off in dependency of the assessed luminosity of the light sources (7).

13. Switching device according to claim 12, characterised in that it comprises a movement detector (3) for detecting moving persons, and means (1) for switching the light sources on and off depending on the output signal of the movement detector.

14. Switching device according to claim 12 or 13, characterised in that it comprises an input port (6) for connecting a manually operable switch for switching the light sources on and off.

15. Switching device according to any of claims 12 to 14, characterised in that is comprises means (1, 11, 12, 13) for modifying the lighting power emitted by the light sources.

16. Switching device according to any of claims 12 to 15, characterised in that the light sensor (2) has a spectral sensitivity curve essentially similar to that of the human eye.

## Revendications

1. Procédé pour l'allumage et l'extinction automatique de sources de lumière (7) dans une pièce en fonction de la luminosité qui y règne, au moyen d'un circuit (1, 8) commandant les sources lumineuses (7) et comprenant un capteur (2) de lumière pour déterminer la luminosité régnant dans la pièce, l'allumage, respectivement l'extinction, ayant lieu en fonction d'une valeur-seuil de la luminosité mesurée dans la pièce par le capteur (2), caractérisé en ce que le circuit détermine la luminosité des sources de lumière (7) en mesurant lors de l'extinction des sources de lumière (7) la différence entre la luminosité mesurée par le capteur (2) avant et après l'extinction des sources de lumière (7), et que le circuit de commande (1, 8) redétermine la valeur-seuil momentanée à intervalles périodiques ou stochastiques en fonction de la luminosité mesurée des sources de lumière (7).

2. Procédé selon la revendication 1, caractérisé en ce que l'allumage et l'extinction des sources de lumière (7) sont en outre effectués en fonction du signal de sortie d'un senseur (3) détectant la présence d'une personne dans la pièce.

3. Procédé selon une des revendications 1 ou 2, caractérisé en ce que l'allumage et l'extinction des sources de lumière (7) sont en outre effectués en fonction de la position d'au moins un interrupteur ouvert/fermé à commande manuelle.

4. Procédé selon la revendication 1, caractérisé en ce que l'on mémorise plusieurs différences observées, que l'on calcule une moyenne entre ces différences et la différence observée en dernier, et qu'après chaque calcul de la moyenne la différence la plus ancienne est effacée de la mémoire pour constamment mettre à jour la valeur de la luminosité.

5. Procédé selon une des revendications 1 à 4, caractérisé en ce que l'on détermine la luminosité des sources de lumière uniquement quand la luminosité mesurée avant l'extinction et/ou celle mesurée après l'extinction, ou leur différence ne sont pas supérieures ou inférieures à des valeurs-limite prédéterminées.

6. Procédé selon une des revendications 1 à 5, caractérisé en ce que l'on détermine un seuil pour l'extinction des sources de lumière en cas de grande luminosité ainsi qu'un seuil pour leur allumage en cas de faible luminosité après chaque mesure de la valeur de lumière.

7. Procédé selon une des revendications 1 à 6, caractérisé en ce que le seuil pour l'extinction des sources de lumière est fixé à une valeur comprise entre 150 et 400% de la luminosité des sources de lumière et que le seuil pour l'allumage des sources de lumière est fixé à une valeur comprise entre 50 et 200% de la luminosité des sources de lumière, la différence entre les valeurs-seuil pour l'extinction et l'allumage excédant 100% de la valeur de la luminosité des sources de lumière.

8. Procédé selon une des revendications 1 à 7, caractérisé par l'extinction des sources de lumière lorsque la luminosité mesurée excède pendant un laps de temps prédéterminé la valeur-seuil pour l'extinction des sources de lumière, et par allumage sans délai des sources de lumière lorsque la luminosité mesurée est inférieure à la valeur-seuil pour l'allumage des sources de lumière.

9. Procédé selon une des revendications 1 à 8, caractérisé en ce qu'à chaque nouvelle mesure de l'intensité lumineuse des sources de lumière on calcule à nouveau une valeur de consigne de l'intensité lumineuse, une valeur-seuil pour l'extinction des sources de lumière en cas de grande luminosité et une valeur-seuil pour l'allumage des sources de lumière en cas de faible luminosité.

10. Procédé selon la revendication 9, caractérisé en ce que l'on règle la valeur de consigne de la luminosité à une valeur comprise entre 10 et 200% de celle des sources de lumière, que la valeur-seuil pour l'extinction des sources de lumière est réglée à une valeur comprise entre 20 et 300% de la luminosité des sources de lumière et que la valeur-seuil pour l'allumage des sources de lumière est réglée à une valeur comprise entre 10 et 200% de la luminosité des sources de lumière, la différence entre les valeurs-seuil pour l'extinction et l'allumage des sources de lumière excédant 10% de la luminosité des sources de lumière.

11. Procédé selon une des revendications 1 à 10, caractérisé en ce que la luminosité dans la pièce est maintenue de façon continue à une valeur de consigne, que les sources de lumière sont éteintes lorsque la luminosité mesurée excède pendant un laps de temps prédéterminé la valeur-seuil pour l'extinction des sources de lumière, et que les sources de lumière sont allumées sans délai lorsque la luminosité mesurée est inférieure à la valeur-seuil pour l'allumage des sources de lumière.

12. Dispositif pour l'allumage et l'extinction automatique des sources de lumière dans une pièce en fonction de la luminosité régnant dans cette pièce, avec un capteur de lumière (2) pour mesurer la luminosité régnant dans la pièce, un circuit de commande (1) réagissant au niveau du signal de sortie du capteur et au moins un interrupteur (8) commandé par le circuit de commande pour actionner les sources de lumière, caractérisé en ce que le circuit de commande (1) pour la détermination de la luminosité des sources de lumière (7) au moyen du capteur de lumière (2) est agencé de manière à calculer, lors de l'extinction des sources de lumière (7), la différence entre la luminosité mesurée par le capteur (2) avant et après l'extinction, et en ce que le circuit de commande (1) est agencé pour déterminer des valeurs-seuil pour l'allumage, respectivement l'extinction, en fonction de la luminosité mesurée des sources de lumière.

13. Dispositif selon la revendication 12, caractérisé par un senseur de mouvement (3) pour détecter les mouvements de personnes, ainsi que par des moyens (1) pour allumer et éteindre les sources de lumière en fonction du signal de sortie du senseur de mouvement.

14. Dispositif selon une des revendications 12 ou 13, caractérisé en ce qu'il comporte une entrée (6) pour connecter un interrupteur manuel pour allumer et éteindre les sources de lumière.

15. Dispositif selon une des revendications 12 à 14, caractérisé en ce qu'il comporte des moyens (1, 11, 12, 13) pour modifier la puissance lumineuse émise par les sources de lumière.

16. Dispositif selon une des revendications 12 à 15, caractérisé en ce que le senseur (2) possède une courbe de sensibilité spectrale essentiellement similaire à celle de l'oeil humain.
